# EUROPEAN PATENT SPECIFICATION

(11) **EP 1 715 620 B1**
(45) Date of publication and mention of the grant of the patent: **09.04.2008**
(21) Application number: 05103044.3
(22) Date of filing: 18.04.2005
(51) Int. Cl.: H04L 12/24, H04L 29/06

(54) **Method and system for remote server administration**
Verfahren und System zur Serverfernadministration
Procédé et système d'administration de serveur à distance

(43) Date of publication of application: 25.10.2006
(73) Proprietor: Research In Motion Limited, Waterloo, Ontario N2L 3W8 (CA)
(72) Inventor: Chen, Xianfeng (Bill), L5M 3G2, Mississauga, (CA); Fritsch, Brindusa, M9C 2J9, Toronto, (CA); Shenfield, Michael, L4C 3S9, Richmond Hill, (CA)
(74) Representative: Rickard, David John

(56) References cited:
- EP-A- 1 241 828
- WO-A-02/48866
- US-A- 6 161 136
- US-A1- 2003 118 353
- US-B1- 6 664 978
- BAEK JONG-WOEK ET AL: "ATM CUSTOMER NETWORK MANAGEMENT USING WWW AND CORBA TECHNOLOGIES" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15 February 1998 (1998-02-15), pages 120-129, XP002196318 ISBN: 0-7803-4351-4

## Description

The present invention relates to wireless communications devices, and in particular to a method and system for remote server administration from a wireless terminal device.

The number and variety of wireless terminal devices, such as mobile telephones, personal computers and PDAs with wireless communication capabilities, self service kiosks and two-way pagers is rapidly increasing. Software applications which run on these devices increase their utility. For example, a mobile phone may include an application which retrieves the weather for a range of cities, or a PDA may include an application that allows a user to shop for groceries. These software applications take advantage of wireless connectivity to a data network (such as the internet) in order to provide timely and useful services to users.

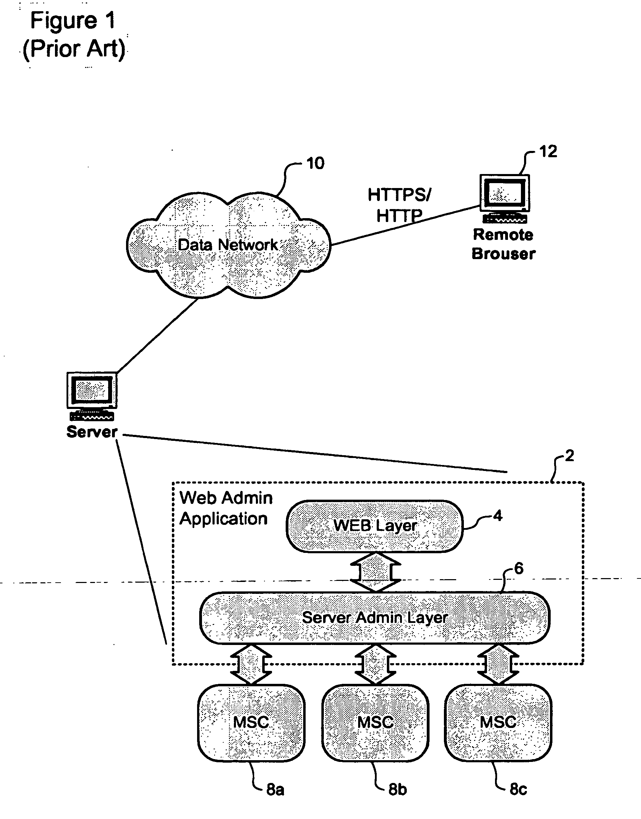

Graphical User Interface (GUI) based server administration tools provide user-friendly interfaces for a system administrator to configure, manage, monitor, and trouble-shoot various servers. Web-based server administration is becoming increasingly popular because it provides a convenient way of enabling remote server management over a data network (e.g. the Internet). In comparison with traditional server administration tools, web based administration offers various benefits. For example, the server can be accessed and managed via a conventional browser interface, and does not require installation of specialized administration software on the "remote" terminal. As a result, the server can be accessed and managed from virtually any terminal having a connection to the network. Additionally, web-based administration applications can work with enterprise servers through standard Hypertext Transfer Protocol (HTTP) and Secure Hypertext Transfer Protocol (HTTPS) protocols. This simplifies communications, and improves security for network/firewall management, because no extra ports need to be opened and managed through the firewall. Encryption and basic authentication can be provided by HTTPS/HTTP protocols respectively. Finally, web-based administration application software can be easily developed using well known techniques and application development tools. A representative web-based server administration system is illustrated in FIG. 1.

As may be seen in FIG. 1, a typical web-based server administration application 2 can conveniently be built using a layered architecture, including web layer 4, a server administration layer 6 with administration logic, and managed servers or server components (MSCs) 8 that are linked to the server administration layer 6 for web-based administration. The web layer 4 is configured as a thin client which exposes a server administration interface to the data network 10 using standard hyper-text mark-up language (HTML). A system administrator using a remote browser 12 (such as, for example Microsoft Internet Explorer(TM) ) can then access the server administration interface to perform desired management functions in respect of any of the MSCs 8. As is well known in the art, a layered structure of this type has an advantage in that it enables separation of the interface and server administration functionality, so that each layer can be independently developed and maintained. Unlike a fat-client user interface (UI), such as is typically implemented in Java Swing or Windows(Trademark) applications, coding in HTML requires no knowledge of complicated application program interface (API) or computer programming languages.

However, web-based server administration tools suffer from a number of shortcomings. For example, web-based applications require a stable network (internet) connection. Additionally, web based administration tools with sophisticated HTML interfaces typically consume significant amounts of resources, such as memory and transmission bandwidth. A further limitation is that web based applications are based on a "Pull" technology, in which data (in this case, server status information) is downloaded to the remote terminal (browser) only in response to a "refresh" command from the remote terminal.

WO2002/048866 discloses a system for management of web resources using mobile devices wireless connected to a web-based server, in which the client device includes only client system software, all the server management functionality being provided at the server.

US6161136 discloses a User Interface (UI) which is divided into a Client portion and a Server portion, so that traffic between the client and server can be limited to user-inputted commands and status update information.

As a result of these factors, wireless terminal devices are typically unsuitable for web-based server administration. In particular, wireless networks tend to suffer from fade (signal attenuation) and temporary service interruptions (due to loss of signal), which interfere with the maintenance of a stable network (internet) connection. Additionally, wireless networks frequently suffer from low transmission bandwidth, thereby limiting the usefulness of any application which generates a large amount of HTTP traffic. Furthermore, most wireless terminal devices lack sufficient resources (principally memory, but also including processor speed and the size/sophistication of the display screen) to effectively utilize complex HTML pages operating through a browser interface. Finally, the "Pull" technology of web-based applications means that a server administrator will only receive a system status update when they request it. This implies that the administrator might not be timely notified of a change in server status, which could be critical in an emergency situation. It is possible to mitigate this latter problem by designing the web-based application 2 to continuously refresh the browser window, but this increases network traffic and taxes the bandwidth capacity of the wireless network.

Accordingly, methods and systems enabling remote server administration from a wireless terminal device remains highly desirable.

### GENERAL

Accordingly, the present invention preferably provides methods and systems which overcome at least some of the above-noted deficiencies of the prior art.

The present invention preferably also provides methods and systems for remote server administration from a wireless terminal device.

The objects of the invention are met by the features of the present invention defined in the appended independent claims. Optional features of the invention are defined in the dependent claims.

Thus, an aspect of the present invention provides a method of enabling remote administration of one or more managed server components of a data network using a terminal device of a wireless network, wherein the method comprises the steps of: providing an application gateway coupled to the data network and the wireless network and hosting the terminal device, the application gateway being adapted to mediate signalling between the terminal device and a plurality of web services of the data network; and installing a server administration application on the terminal device and the application gateway, the server administration application being adapted to control a generic runtime environment of the terminal device to interact with the application gateway, via a portion of application logic of the server administration application being executed on the application gateway, to subscribe with a generic subscription/notification functionality of the application gateway; the application gateway subsequently subscribing with an administration web service, on behalf of the server administration application, to obtain notification events related to any changes that are relevant to the server administration application, and to thereafter forwarding any notification events received from the administration web service to the server administration application on the terminal device, so as to thereby provide a respective server management function of the server administration application with reduced signalling traffic to/from the terminal device.

In a second aspect of the invention, there is provided a system for remote administration of one or more managed server components of a data network, the system comprising a terminal device of a wireless network and an application gateway coupled to the data network and the wireless network and hosting the terminal device, the application gateway being adapted to mediate signalling between the terminal device and a plurality of web services of the data network, wherein: a server administration application is installed on the terminal device and the application gateway, the server administration application being adapted to control a generic runtime environment of the terminal device to interact with the application gateway, via a portion of application logic of the server administration application being executed on the application gateway, to subscribe with a generic subscription/notification functionality of the application gateway; the application gateway subsequently subscribing with an administration web service, on behalf of the server administration application, to obtain notification events related to any changes that are relevant to the server administration application, and to thereafter forwarding any notification events received from the administration web service to the server administration application on the terminal device, so as to thereby provide a respective server management function of the server administration application with reduced signalling traffic to/from the terminal device.

### BRIEF DESCRIPTION OF THE DRAWINGS

Further features and advantages of the present invention will become apparent from the following detailed description, taken in combination with the appended drawings, in which:

FIG. 1 is a block diagram schematically illustrating a conventional web-based server administration system;

FIG. 2 is a block diagram schematically illustrating components and operation of a representative remote server administration system in accordance with an embodiment of the present invention;

It will be noted that throughout the appended drawings, like features are identified by like reference numerals.

### DESCRIPTION OF PREFERRED EMBODIMENTS

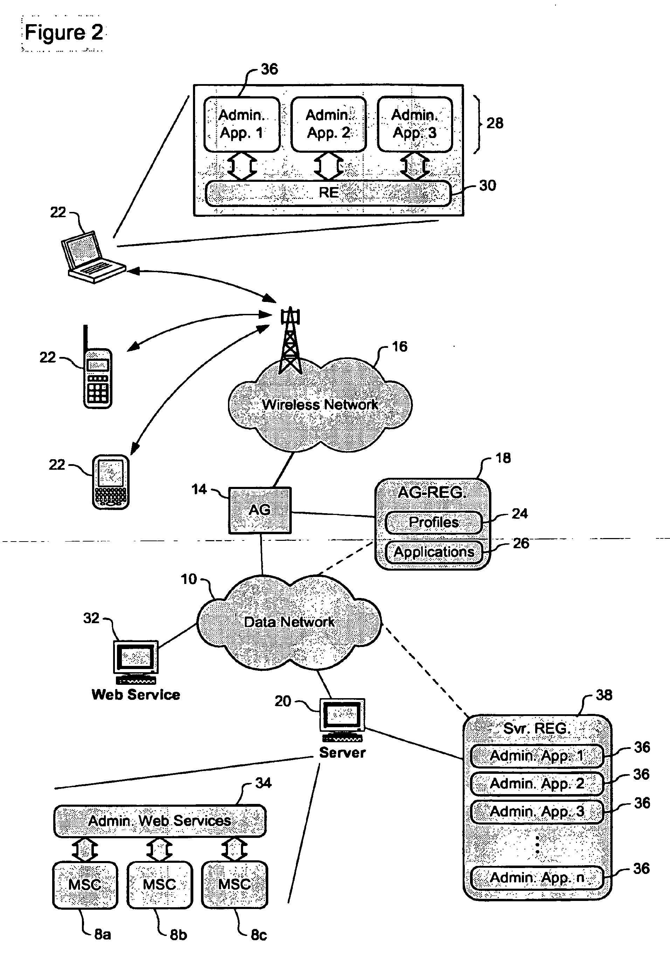

The present invention provides methods and systems for remote server administration from a wireless terminal device. A representative embodiment of the invention is described below, by way of example only, with reference to FIG. 2.

Referring to FIG. 2, a system in accordance with a representative embodiment of the present invention generally comprises an Application Gateway (AG) 14 coupled between a wireless network 16 and the data network 10, such as for example, the internet; a registry 18; a server system 20 coupled to the data network 10 to enable remote management; and one or more wireless terminal devices 22 coupled to the wireless network 16, and hosted by the AG 14.

The AG 14 generally operates to mediate message flows between the terminal devices 22 and data services accessible through the data network 10 in the manner described in Applicant's co-pending United States Patent Publications Nos. 2004/0215700 and 2004/0220998.

The registry 18, which can be co-resident with the AG 14 or may be located remotely from the AG 14 and accessed via the data network 10, generally comprises a profiles registry 24 and an applications registry 26. The profiles registry 24 contains, for each terminal device 22, a respective profile which contains information identifying each application installed on the terminal device 22. The applications registry 26 contains information identifying wireless applications that are available to the terminal devices 22, and the addresses (e.g. Universal Resources Look-ups - URLs) of respective back end data sources and/or web services of the data network 10 that are accessed by each application.

In general, the terminal devices 22 can be any of a wide variety of software-controlled wireless devices including, but not limited to: mobile telephones; personal computers and PDAs with wireless communication capabilities; self service kiosks; and two-way pagers. As is well known in the art, such devices generally comprise a microprocessor which operates under software control to provide the functionality of the terminal device. As shown in FIG. 2, the software is preferably designed on a layered model, in which one or more wireless applications 28 control the user's experience of the terminal device 22, and a runtime environment (RE) 30 translates between the application software and the native machine-language of the terminal device 22 to control the terminal device hardware, and communicate with data services. This layered software model, and the manner in which it operates is known from Applicant's co-pending United States Patent Publications Nos. 2004/0215700 and 2004/0220998.

As described in Applicant's co-pending United States Patent Publications Nos. 2004/0215700 and 2004/0220998, operation of the AG 14 enables a wireless application 28 executing in a terminal device 22 to communicate with web services 32 offered through the data network 10. This operation may, for example, including accessing HTML content, and downloading files from back-end data sources (not shown) connected to the data network 10. In order to reduce device resource requirements, each wireless application 28 provides User Interface (UI) functionality (for both display and user input) appropriate to the capabilities of the particular terminal device 22. At least a portion of the application logic is executed on the AG 14 itself, so that signalling between the AG 14 and the terminal device 22 is limited to downloading application data to the terminal device 22 for local storage and display, and uploading user inputs. The application logic executing on the AG 14 communicates with the web service 32 or back-end data resource on the data network 10, in response to the user inputs received from the terminal device 22, to provide the functionality of wireless application 28. This arrangement enables a user of the terminal device 22 to access and use the web service's functionality, but with reduced signalling traffic to/from the terminal device 22 to thereby limit wireless network bandwidth and device resource requirements. In addition, the AG 14 is capable of implementing a generic subscription/notification function for application data that resides outside the AG 14. With this arrangement, the AG 14 subscribes to an event source (that is, a component of a Web service or back-end data source which is capable of generating notification events) on behalf of a wireless application 28 installed on a terminal device 22. Thereafter, the event source generates and sends Notification Events to the AG 14 in accordance with the subscription. As Notification Events are received by the AG 14, they are processed to determine the subscription(s) that they are associated with, and forwarded to the affected terminal device(s) 22, using, for example, the profiles registry 24 to identify the involved terminal device(s) 22.

In the illustrated embodiment, this functionality of the AG 14 is leveraged to enable remote server administration from a wireless terminal device 22. In particular, the server administration functionality for one or more managed server components (MSCs) 8 is implemented as an administration web service 34, which is developed and deployed on the data network 10 using techniques well known in the art. One or more lightweight server administration wireless applications (server admin. applications) 36 are developed to implement server management functions as desired. The server admin. applications 36 can then be published and installed on the AG 14 and one or more terminal devices 22 according to actual system administration needs. Thereafter, the MSC's 8 can be monitored and managed from the terminal devices 22 by execution of the applicable server admin. application(s) 36.

In principle, all of the desired server management functions could be implemented within a single server admin. application 36. However, this solution would tend to produce an undesirably large application, which reduces the range of different terminal devices 22 on which it can be installed. Accordingly, it is preferable to publish a plurality of small server admin. applications, each of which provides a specific server management function and user permissions, and a UI flavour appropriate for a specific type of terminal device 22. In some cases, it may be convenient to store the complete set of server admin. applications 36 within a Server Registry 38, in which each server admin. application 36 is associated with information identifying the administration function(s) performed by that server admin. application 36 and either the UI flavour and/or the type(s) of terminal device(s) that can run the server admin. application 36. The Server Registry 38 may be associated with the server 20 itself, or may be maintained as a back-end resource connected to the data network 10. In either case, storing server admin. applications 36 within a server registry 38 in this manner allows server admin. applications 36 to be selected for download from the Server Registry 38 and installed on a terminal device 22 (and the AG 14), on an "as-needed" basis. The deployment of multiple such lightweight server admin. applications 36 enables a system administrator to manage the MSCs 8 using any of a variety of different terminal devices 22, by selecting, downloading and installing on each terminal device 22 those server admin. applications 36 having the appropriate combination of functionality, permissions and UI.

The solution of the present invention offers the following advantages:
- server admin. applications 36 are lightweight and efficient, both on the server 20 and terminal devices 22. The present invention separates the invocation of administration web services 34 from the resulting display on a terminal device 22. As a result, the "Web Services" implementation of server administration functionality is only responsible for the actual server-side administration tasks; there is no need for the Web Service 34 to generate the UI presentation, which saves server resources and power.
- In comparison with conventional web-based server administration, the illustrated embodiment provides a more flexible, balanced, and distributed solution. The design of a conventional web-based administration tool needs to take many factors into consideration, such as session management, authentication and authorization, etc., which increase the size and complexity of any "complete" web-based server administration tool. The mobile server solution of Fig. 2 enables a "complete" server administration solution through the use of multiple special purpose server admin. applications 36, and leverages the existing session management functionality of the AG 14.
- With security wireless infrastructure support, secure communications between the AG 14 and the terminal device 22 can be guaranteed. An end-to-end secure solution can be obtained by placing the administration web service 34 behind a firewall (not shown), in a manner known in the art.
- The wireless friendly "push" operation enabled by the subscription/notification function of the AG 14 means that server admin. applications 36 can be easily deployed to automatically receive notifications and alerts of server emergencies, which enables faster administration response time. Thus, for example, a server admin. application 36 installed on a terminal device 22 can subscribe to a notification service of the AG 14. Using the AG's generic subscription/notification functionality, the AG 14 then subscribes with the administration web service 34, on behalf of the server admin. application 36, to obtain notification events related to any changes (in any of the MSCs 8) that are relevant to the server admin. application 36. Any subsequently received notification events are automatically forwarded by the AG 14 to the server admin. application 36 running on the terminal device 22. In cases where the MSC 8 is the Application Gateway 14 itself (or a component thereof) a variation of the generic subscription/notification functionality can be implemented, in which changes that are relevant to the server admin. application 36 are passed to the server admin. application 36 without the generation and handling of a notification event per se. The use of the subscription/notification functionality of the AG 14 for event handling ensures that the user of the server admin. application 36 receives prompt notification of any changes in MSC status.

The embodiment(s) of the invention described above is(are) intended to be exemplary only. The scope of the invention is therefore intended to be limited solely by the scope of the appended claims.

## Claims

1. A method of enabling remote administration of one or more managed server components (8) of a data network (10) using a terminal device (22) of a wireless network (16), wherein the method comprises the steps of:
providing an application gateway (14) coupled to the data network (10) and the wireless network (16) and hosting the terminal device (22), the application gateway (14) being adapted to mediate signalling between the terminal device (22) and a plurality of web services (32, 34) of the data network (10); and
installing a server administration application (36) on the terminal device (22) and the application gateway (14), the server administration application (36) being adapted to control a generic runtime environment of the terminal device (22) to interact with the application gateway (14), via a portion of application logic of the server administration application (36) being executed on the application gateway (14), to subscribe with a generic subscription/notification functionality of the application gateway (14); the application gateway (14) subsequently subscribing with an administration web service (34), on behalf of the server administration application (36), to obtain notification events related to any changes that are relevant to the server administration application (36), and to thereafter forwarding any notification events received from the administration web service (34) to the server administration application (36) on the terminal device (22), so as to thereby provide a respective server management function of the server administration application (36) with reduced signalling traffic to/from the terminal device (22).

2. A method as claimed in claim 1, wherein the step of installing a server administration application (36) comprises the steps of:
accessing a first plurality of server administration applications (38), each application within the first plurality of applications having a respective predetermined server management function and User Interface;
selecting, from the first plurality of applications, a second plurality of applications, each application within the second plurality of applications having a User Interface that matches a capability of the terminal device; and
installing at least one application from the second plurality of applications on the terminal device.

3. A method as claimed in claim 1 or claim 2, wherein a plurality of server administration applications (36) are installed on the terminal device.

4. A method as claimed in claim 3, wherein each server administration application (36) provides a respective specific server administration function.

5. A method as claimed in any one of claims 1 to 4, wherein the server administration application (36) comprises:
an application logic portion for execution on the application gateway;
a user interface portion for execution on the terminal device;
wherein the user interface portion is adapted to display application data received from the application logic portion, and to send user inputs to the application logic portion; and
wherein the application logic portion is responsive to the user inputs received from the user interface portion to interact with the administration web service to implement the respective server management function.

6. A method as claimed in claim 5, wherein the step of installing the server administration application (36) on the terminal device comprises steps of:
downloading the user interface portion to the terminal device;
registering the downloaded user interface portion and the application logic portion on the application gateway, such that launching the downloaded user interface portion on the terminal device triggers execution of the application logic portion on the application gateway.

7. A method as claimed in any one of claims 1 to 6,
wherein the administration web service (34) comprises an event source component designed to generate a notification event indicative of a predetermined change, and wherein the method further comprises a step of subscribing a server administration application installed on the terminal device with a subscription/notification function of the application gateway, such that the application gateway (14) operates to:
subscribe with the event source of the administration web service (34) to receive notification events;
subsequently receive notification events from the event source;
process received notification events to identify notification events that are relevant to the server administration application (36); and
forward each identified notification event to the server administration application (36).

8. A system for remote administration of one or more managed server components (8) of a data network (10), the system comprising a terminal device (22) of a wireless network (16) and an application gateway (14) coupled to the data network (10) and the wireless network (16) and hosting the terminal device (22), the application gateway (14) being adapted to mediate signalling between the terminal device (22) and a plurality of web services (32, 34) of the data network (10), wherein:
a server administration application (36) is installed on the terminal device (22) and the application gateway (14), the server administration application (36) being adapted to control a generic runtime environment of the terminal device (22) to interact with the application gateway (14), via a portion of application logic of the server administration application (36) being executed on the application gateway (14), to subscribe with a generic subscription/notification functionality of the application gateway (14); the application gateway (14) subsequently subscribing with an administration web service (34), on behalf of the server administration application (36), to obtain notification events related to any changes that are relevant to the server administration application (36), and to thereafter forwarding any notification events received from the administration web service (34) to the server administration application (36) on the terminal device (22), so as to thereby provide a respective server management function of the server administration application (36) with reduced signalling traffic to/from the terminal device (22).

9. A system as claimed in claim 8, wherein a plurality of server administration applications (36) are installed on the terminal device.

10. A system as claimed in claim 9, wherein each server administration application (36) provides a respective specific server administration function.

11. A system as claimed in any one of claims 8 to 10,
wherein the server administration application (36) comprises:
an application logic portion registered on the application gateway (14);
a user interface portion installed on the terminal device (22);
wherein the user interface portion is adapted to display application data received from the application logic portion, and to send user inputs to the application logic portion; and
wherein the application logic portion is responsive to the user inputs received from the user interface portion to interact with the administration web service to implement the respective server management function.

## Patentansprüche

1. Verfahren zum Ermöglichen der Fernadministration von einer oder mehreren verwalteten Serverkomponenten (8) eines Datennetzes (10) unter Verwendung eines Endgeräts (22) eines Drahtlosnetzes (16), wobei das Verfahren die folgenden Schritte umfasst:
das Bereitstellen eines Anwendungsgateways (14), das mit dem Datennetz (10) und dem Drahtlosnetz (16) verbunden ist und welches das Endgerät (22) hostet, wobei das Anwendungsgateway (14) dazu angepasst ist, die Signalisierung zwischen dem Endgerät (22) und einer Vielzahl von Web-diensten (32, 34) des Datennetzes (10) zu vermitteln; und
das Installieren einer Serveradministrationsanwendung (36) auf dem Endgerät (22) und dem Anwendungsgateway (14), wobei die Serveradministrationsanwendung (36) dazu angepasst ist, eine generische Laufzeitumgebung des Endgeräts (22) zu steuern, um mit dem Anwendungsgateway (14) zu interagieren, und zwar über einen Abschnitt der Anwendungslogik der Serveradministrationsanwendung (36), der auf dem Anwendungsgateway (14) ausgeführt wird, um eine generische Abonnement-/ Benach-richtigungsfunktionalität des Anwendungsgateways (14) zu abonnieren; wobei das Anwendungsgateway (14) anschließend im Auftrag der Serveradministrationsanwendung (36) einen Administrationswebdienst (34) abonniert, um Benachrichtigungsereignisse im Zusammenhang mit jeglichen Änderungen zu erhalten, die für die Serveradministrationsanwendung (36) relevant sind, und um danach jegliche von dem Administrationswebdienst (34) empfangenen Benachrichtigungsereignisse zu der Serveradministrationsanwendung (36) auf dem Endgerät (22) weiterzuleiten, um **dadurch** eine jeweilige Serververwaltungsfunktion der Serveradministrationsanwendung (36) mit reduziertem Signalisierungsverkehr zum/vom Endgerät (22) bereitzustellen.

2. Verfahren gemäß Anspruch 1, wobei der Schritt des Installierens einer Serveradministrationsanwendung (36) die folgenden Schritte umfasst:
das Zugreifen auf eine erste Vielzahl von Serveradministrationsanwendungen (38), wobei jede Anwendung innerhalb der ersten Vielzahl von Anwendungen eine jeweilige vorgegebene Serververwaltungsfunktion und Benutzerschnittstelle hat;
das Auswählen einer zweiten Vielzahl von Anwendungen aus der ersten Vielzahl von Anwendungen, wobei jede Anwendung innerhalb der zweiten Vielzahl von Anwendungen eine Benutzerschnittstelle hat, die mit einer Fähigkeit des Endgeräts übereinstimmt; und
das Installieren von mindestens einer Anwendung aus der zweiten Vielzahl von Anwendungen auf dem Endgerät.

3. Verfahren gemäß Anspruch 1 oder Anspruch 2, wobei eine Vielzahl von Serveradministrationsanwendungen (36) auf dem Endgerät installiert wird.

4. Verfahren gemäß Anspruch 3, wobei jede
Serveradministrationsanwendung (36) eine jeweilige spezifische Serveradministrationsfunktion bereitstellt.

5. Verfahren gemäß einem der Ansprüche 1 bis 4, wobei die Serveradministrationsanwendung (36) umfasst:
einen Anwendungslogikabschnitt zur Ausführung auf dem Anwendungsgateway;
einen Benutzerschnittstellenabschnitt zur Ausführung auf dem Endgerät;
wobei der Benutzerschnittstellenabschnitt dazu angepasst ist, Anwendungsdaten anzuzeigen, die von dem Anwendungslogikabschnitt empfangen wurden, und Benutzereingaben an den Anwendungslogikabschnitt zu senden; und
wobei der Anwendungslogikabschnitt auf die von dem Benutzerschnittstellenabschnitt empfangenen Benutzereingaben reagiert, um mit dem Administrationswebdienst zu interagieren, damit die jeweilige Serververwaltungsfunktion implementiert wird.

6. Verfahren gemäß Anspruch 5, wobei der Schritt des Installierens der Serveradministrationsanwendung (36) auf dem Endgerät die folgenden Schritte umfasst:
das Herunterladen des Benutzerschnittstellenabschnitts auf das Endgerät; das Registrieren des heruntergeladenen Benutzerschnittstellenabschnitts und des Anwendungslogikabschnitts auf dem Anwendungsgateway, so dass das Starten des heruntergeladenen Benutzerschnittstellenabschnitts auf dem Endgerät die Ausführung des Anwendungslogikabschnitts auf dem Anwendungsgateway auslöst.

7. Verfahren gemäß einem der Ansprüche 1 bis 6, wobei der Administrationswebdienst (34) eine Ereignisquellenkomponente umfasst, die zum Erzeugen eines Benachrichtigungsereignisses ausgelegt ist, welches Auskunft über eine vorgegebene Änderung gibt, und wobei das Verfahren des Weiteren einen Schritt des Abonnierens einer Abonnement-/Benachrichtigungsfunktion des Anwendungsgateways durch eine auf dem Endgerät installierte Serveradministrationsanwendung umfasst, so dass das Anwendungsgateway (14) Folgendes durchführt:
das Abonnieren der Ereignisquelle des Administrationswebdienstes (34), um Benachrichtigungsereignisse zu empfangen;
das anschließende Empfangen von Benachrichtigungsereignissen von der Ereignisquelle;
das Verarbeiten der empfangenen Benachrichtigungsereignisse, um diejenigen Benachrichtigungsereignisse zu identifizieren, die für die Serveradministrationsanwendung (36) relevant sind; und
das Weiterleiten von jedem identifizierten Benachrichtigungsereignis an die Serveradministrationsanwendung (36).

8. System zur Fernadministration von einer oder mehreren verwalteten Serverkomponenten (8) eines Datennetzes (10), wobei das System ein Endgerät (22) eines Drahtlosnetzes (16) und ein mit dem Datennetz (10) und dem Drahtlosnetz (16) verbundenes Anwendungsgateway (14) umfasst, welches das Endgerät (22) hostet, wobei das Anwendungsgateway (14) dazu angepasst ist, die Signalisierung zwischen dem Endgerät (22) und einer Vielzahl von Webdiensten (32, 34) des Datennetzes (10) zu vermitteln, wobei:
eine Serveradministrationsanwendung (36) auf dem Endgerät (22) und dem Anwendungsgateway (14) installiert wird, wobei die Serveradministrationsanwendung (36) dazu angepasst ist, eine generische Laufzeitumgebung des Endgeräts (22) zu steuern, um mit dem Anwendungsgateway (14) zu interagieren, und zwar über einen Abschnitt der Anwendungslogik der Serveradministrationsanwendung (36), der auf dem Anwendungsgateway (14) ausgeführt wird, um eine generische Abonnement-/Benachrichtigungsfunktionalität des Anwendungsgateways (14) zu abonnieren; wobei das Anwendungsgateway (14) anschließend im Auftrag der Serveradministrationsanwendung (36) einen Administrationswebdienst (34) abonniert, um Benachrichtigungsereignisse im Zusammenhang mit jeglichen Änderungen zu erhalten, die für die Serveradministrationsanwendung (36) relevant sind, und um danach jegliche von dem Administrationswebdienst (34) empfangenen Benachrichtigungsereignisse zu der Serveradministrationsanwendung (36) auf dem Endgerät (22) weiterzuleiten, um **dadurch** eine jeweilige Serververwaltungsfunktion der Serveradministrationsanwendung (36) mit reduziertem Signalisierungs-verkehr zum/vom Endgerät (22) bereitzustellen.

9. System gemäß Anspruch 8, wobei eine Vielzahl von Serveradministrationsanwendungen (36) auf dem Endgerät installiert werden.

10. System gemäß Anspruch 9, wobei jede Serveradministrationsanwendung (36) eine jeweilige spezifische Serveradministrationsfunktion bereitstellt.

11. System gemäß einem der Ansprüche 8 bis 10, wobei die Serveradministrationsanwendung (36) umfasst:
einen auf dem Anwendungsgateway (14) registrierten Anwendungslogikabschnitt;
einen auf dem Endgerät (22) installierten Benutzerschnittstellenabschnitt;
wobei der Benutzerschnittstellenabschnitt dazu angepasst ist, Anwendungsdaten anzuzeigen, die von dem Anwendungslogikabschnitt empfangen wurden, und Benutzereingaben an den Anwendungslogikabschnitt zu senden; und
wobei der Anwendungslogikabschnitt auf die von dem Benutzerschnittstellenabschnitt empfangenen Benutzereingaben reagiert, um mit dem Administrationswebdienst zu interagieren, damit die jeweilige Serververwaltungsfunktion implementiert wird.

## Revendications

1. Un procédé destiné à mettre en oeuvre l'administration à distance d'un ou plusieurs composants de serveur gérés (8) d'un réseau de données (10) au moyen d'un terminal (22) d'un réseau sans fil (16), où le procédé comprend les opérations suivantes :
la fourniture d'une passerelle d'application (14) couplée au réseau de données (10) et au réseau sans fil (16) et hébergeant le terminal (22), la passerelle d'application (14) étant adaptée de façon à servir d'intermédiaire à la signalisation entre le terminal (22) et une pluralité de services web (32, 34) du réseau de données (10), et
l'installation d'une application d'administration de serveur (36) sur le terminal (22) et sur la passerelle d'application (14), l'application d'administration de serveur (36) étant adaptée de façon à commander un environnement d'exécution générique du terminal (22) de façon à interagir avec la passerelle d'application (14) via une partie logique d'application de l'application d'administration de serveur (36) qui est exécutée sur la passerelle d'application (14), de façon à s'abonner à une fonctionnalité d'abonnement/notification générique de la passerelle d'application (14), la passerelle d'application (14) s'abonnant ultérieurement à un service web d'administration (34) au nom de l'application d'administration de serveur (36) afin d'obtenir des événements de notification en relation avec toutes modifications qui sont pertinentes pour l'application d'administration de serveur (36), et pour, ensuite, transmettre tous les événements de notification reçus du service web d'administration (34) à l'application d'administration de serveur (36) sur le terminal (22), de façon à fournir ainsi une fonction de gestion de serveur donnée de l'application d'administration de serveur (36) avec un trafic de signalisation réduit vers/du terminal (22).

2. Un procédé selon la revendication 1, où l'opération d'installation d'une application d'administration de serveur (36) comprend les opérations suivantes :
l'accès à une première pluralité d'applications d'administration de serveur (38), chaque application de la première pluralité d'applications possédant une fonction de gestion de serveur prédéterminée donnée et une interface utilisateur,
la sélection, dans la première pluralité d'applications, d'une deuxième pluralité d'applications, chaque application de la deuxième pluralité d'applications possédant une interface utilisateur qui correspond à une capacité du terminal, et
l'installation d'au moins une application de la deuxième pluralité d'applications sur le terminal.

3. Un procédé selon la revendication 1 ou 2, où une pluralité d'applications d'administration de serveur (36) est installée sur le terminal.

4. Un procédé selon la revendication 3, où chaque application d'administration de serveur (36) fournit une fonction d'administration de serveur spécifique donnée.

5. Un procédé selon l'une quelconque des revendications 1 à 4, où l'application d'administration de serveur (36) comprend :
une partie logique d'application destinée à être exécutée sur la passerelle d'application,
une partie interface utilisateur destinée à être exécutée sur le terminal,
où la partie interface utilisateur est adaptée de façon à afficher des données d'application reçues de la partie logique d'application, et de façon à envoyer des entrées utilisateur vers la partie logique d'application, et
où la partie logique d'application réagit aux entrées utilisateur reçues de la partie interface utilisateur de façon à interagir avec le service web d'administration pour mettre en oeuvre la fonction de gestion de serveur considérée.

6. Un procédé selon la revendication 5, où l'opération d'installation de l'application d'administration de serveur (36) sur le terminal comprend les opérations suivantes :
le téléchargement de la partie interface utilisateur vers le terminal,
l'enregistrement de la partie interface utilisateur téléchargée et de la partie logique d'application sur la passerelle d'application, de sorte que le lancement de la partie interface utilisateur téléchargée sur le terminal déclenche l'exécution de la partie logique d'application sur la passerelle d'application.

7. Un procédé selon l'une quelconque des revendications 1 à 6, où le service web d'administration (34) comprend une composante source d'événement conçue de façon à générer un événement de notification indicatif d'une modification prédéterminée, et où le procédé comprend en outre une opération d'abonnement à une application d'administration de serveur installée sur le terminal avec une fonction d'abonnement/notification de la passerelle d'application, de sorte que la passerelle d'application (14) fonctionne de façon à :
s'abonner à la source d'événement du service web d'administration (34) de façon à recevoir des événements de notification,
recevoir ultérieurement des événements de notification de la source d'événement,
traiter les événements de notification reçus afin d'identifier les événements de notification qui sont pertinents pour l'application d'administration de serveur (36), et
transmettre chaque événement de notification identifié à l'application d'administration de serveur (36).

8. Un système destiné à l'administration à distance d'un ou plusieurs composants de serveur gérés (8) d'un réseau de données (10), le système comprenant un terminal (22) d'un réseau sans fil (16) et une passerelle d'application (14) couplée au réseau de données (10) et au réseau sans fil (16) et hébergeant le terminal (22), la passerelle d'application (14) étant adaptée de façon à servir d'intermédiaire à la signalisation entre le terminal (22) et une pluralité de services web (32, 34) du réseau de données (10), où :
une application d'administration de serveur (36) est installée sur le terminal (22) et sur la passerelle d'application (14), l'application d'administration de serveur (36) étant adaptée de façon à commander un environnement d'exécution générique du terminal (22) de façon à interagir avec la passerelle d'application (14) via une partie logique d'application de l'application d'administration de serveur (36) qui est exécutée sur la passerelle d'application (14), de façon à s'abonner à une fonctionnalité d'abonnement/notification générique de la passerelle d'application (14), la passerelle d'application (14) s'abonnant ultérieurement à un service web d'administration (34) au nom de l'application d'administration de serveur (36) afin d'obtenir des événements de notification en relation avec toutes modifications qui sont pertinentes pour l'application d'administration de serveur (36), et pour, ensuite, transmettre tous les événements de notification reçus du service web d'administration (34) à l'application d'administration de serveur (36) sur le terminal (22), de façon à fournir ainsi une fonction de gestion de serveur donnée de l'application d'administration de serveur (36) avec un trafic de signalisation réduit vers/du terminal (22).

9. Un système selon la revendication 8, où une pluralité d'applications d'administration de serveur (36) est installée sur le terminal.

10. Un système selon la revendication 9, où chaque application d'administration de serveur (36) fournit une fonction d'administration de serveur spécifique donnée.

11. Un système selon l'une quelconque des revendications 8 à 10, où l'application d'administration de serveur (36) comprend :
une partie logique d'application enregistrée sur la passerelle d'application (14),
une partie interface utilisateur installée sur le terminal (22),
où la partie interface utilisateur est adaptée de façon à afficher les données d'application reçues de la partie logique d'application, et de façon à envoyer des entrées utilisateur vers la partie logique d'application, et
où la partie logique d'application réagit aux entrées utilisateur reçues de la partie interface utilisateur de façon à interagir avec le service web d'administration pour mettre en oeuvre la fonction de gestion de serveur considérée.
